# EUROPEAN PATENT APPLICATION

(11) **EP 1 241 501 A1**
(43) Date of publication of application: **18.09.2002**
(21) Application number: 01301353.7
(22) Date of filing: 16.02.2001
(51) Int. Cl.: G02B 6/42, G02B 27/09

(54) **An optical system**

(71) Applicant: Agilent Technologies, Inc. (a Delaware corporation), Palo Alto, CA 94303 (US)
(72) Inventor: Bingham, Richard George, Cambridge, CB3 9HW (GB)
(74) Representative: Coker, David Graeme

(57) **Abstract**

This invention relates to an optical system (10) where an light beam (14) is coupled from a laser (12) into the end of an optic fibre (16) with a coupling assembly (18). The coupling assembly (18) has: a laser output lens (20) for collimating the light incident from the laser (12); a fibre input lens (22) for focusing the light beam (14) into the end of the optic fibre (16); a prism (30) located between the fibre input lens (22) and the laser output lens (20). The prism (30) has a light input facet (32) (32) and a light output facet (34) that are each substantially planar and at an angle to one another in two directions, such that the light beam (14) passing through the prism (30) is expanded in one direction and contracted in another direction, so as to make is more circular and improve the percentage of light that can be coupled into the optic fibre (16).

## Description

The present invention relates to an optical system, in particular to an optical system where light from a laser output is coupled into the end of an optic fibre.

The light beam produced by a semiconductor laser can be of elliptical or other non-circular cross section due to the shape of the active region of the laser. This can lead to losses when the light from the laser is coupled into the end of an optical fibre, since the fibre will normally be of circular cross section. Although it is known to use a wedge shaped lens integrally formed at the end of an optic fibre in order to more efficiently couple light from a laser into the fibre, this can require a high degree of accuracy in the alignment of the fibre end with the output of the laser. Cylindrical or other anamorphic lens can be used to circularise a non-circular beam, but these can be expensive to produce.

The present invention seeks to address the above issues.

According to a first aspect of the present invention, there is provided an optical system comprising: a laser having a laser output; an optic fibre having an optic fibre end; and, a coupling assembly for coupling a light beam from the laser output into the optic fibre end, the coupling assembly having:
a laser output lens for collimating the light incident from the laser on the lens;
a fibre input lens for focusing the light beam into the end of the optic fibre;
a prism having a light input facet and a light output facet;
the prism being arranged between the laser output lens and the fibre input lens such that the collimated light beam is incident on the input facet of the prism and is emitted at the output facet of the prism, wherein the light input facet and the light output facet of the prism are each substantially planar and at an angle to one another, and
wherein the prism is oriented such that in cross section the light beam leaving the prism at the output facet is expanded in one direction and contracted in another direction by the prism.

Because the light beam leaving the prism is expanded in one direction and contracted in another direction, light focused into the fibre input end will be more closely circular in cross section, resulting in a more efficient coupling of light from the laser into the optic fibre.

Preferably, the light incident on the input facet of the prism will be p-polarised (i.e., with the electric field parallel to the plane of incidence of the light), and will be incident at an angle of incidence that is substantially equal to Brewster's angle. This will reduce the amount of light reflected from the input facet of the prism, thereby improving the efficiency of coupling assembly and reducing the need for an anti reflection coating on the input facet of the prism. It will be appreciated angle of incidence corresponding to Brewster's angle will depend on the material from which the prism is made and also the wavelength of the light.

A polarisation rotating element may positioned in front of the prism in order to make the light p-polarised when it is incident on the prism.

The beam will preferably impinge the upon the internal side of the output facet of the prism at an angle to the normal direction of the output facet, so that light that is internally reflected within the prism from the output facet will not follow the same path as the beam, thereby reducing the likelihood of light being reflected back into the laser. Preferably, the angle to the normal direction will be at least 5 degrees, but more preferably the angle to the normal direction will be at least 10 degrees.

In addition to the output facet and the input facet, the prism will preferably have four side faces, each of which is substantially flat. However, the prism may have a different number of side faces, some or each of which may be curved.

In one embodiment, the beam will not suffer internal reflection at any one of the side faces. However, the beam may suffer internal reflection from at least one side face, in which case the side face(s) may be have a mirror coating thereon to increase the amount of light internally reflected.

The prism may be formed from glass, preferably LASFN9 manufactured by Schott. Alternatively, the prism may be formed from ZnS, since ZnS has a higher refractive index, which will allow the prism to be reduced in size, allowing the coupling assembly to be made more compact.

Typically, the length of the sides of the prism will be between about 1 mm and 4 mm. The diameter of the light-carrying core of the optic fibre will typically be about 125 microns.

The optic fibre will preferably be operating as a single mode fibre, the operating wavelength being about 980 nm or about 1550 nm.

The laser may be formed from a III-V semiconductor, and may be a heterojunction laser capable of producing infra red radiation having a wavelength between 780 nm and 1600 nm.

The laser will preferably be formed from layers of GaAs and GaAlAs and will operate at a wavelength of 980 nm. The laser light output power will preferably be between about 100 mW and about 400 mW, allowing the laser to be used as a pump laser for pumping a section of Er doped optic fibre.

Lasers used to pump Er doped optic fibre normally have an active region whose cross section is long in a first direction and short in a second direction, producing an output beam typically having a far field angle of about 7 degrees to 12 degrees in the first direction and about 20 to 28 degrees in the second direction. The coupling assembly will be especially useful with such lasers because of the strongly elliptical output beam that they produce.

The fibre end will preferably have a flat terminating face that is at an angle to the axis of the fibre, preferably about 8 to 10 degrees, in order to reduce the amount of back reflection. The focal point of the fibre input lens will preferably reside close to the terminating face.

Although a single prism will preferably be included in the coupling assembly, a second prism may be used in order to make the beam in line with or parallel to the direction of the beam before it is circularised.

According to a second aspect of the present invention, there is provided an optical coupling assembly for coupling a light beam from a laser output into an optic fibre end, the coupling assembly comprising:
a laser output lens for collimating the light beam out of the laser;
a fibre input lens for focusing the light beam into the end of the optic fibre;
a prism having a light input facet and a light output facet,
the prism being arranged between the laser output lens and the fibre input lens such that the collimated light beam is incident on the input facet of the prism and is emitted at the output facet of the prism,
wherein the light input facet and the light output facet of the prism are each substantially planar and at an angle to one another, and wherein the prism is oriented such that in cross section the light beam leaving the prism at the output facet is expanded in one direction and contracted in another direction by the prism.

The invention will now be further described by way of example with reference to the following drawings in which:
Figure 1 shows a schematic representation of an optical system with a coupling assembly according to the invention;
Figure 2 shows schematically the cross sectional form of a light beam produced by a laser before the light beam has passed through the coupling assembly;
Figure 3 is a side view of a prism for use in the optical system of Figure 1;
Figure 4 is a view of the prism looking along the direction marked A in Figure 3;
Figure 5 is a view of the prism looking along the direction marked B in Figure 3;
Figure 6 is a view of the prism looking along the direction marked C in Figure 3;
Figure 7 is a view of the prism looking along the direction marked D in Figure 3;
Figure 8 is a perspective view of the prism shown in Figure 3;
Figures 9 to 10 are different perspective views of the prism shown in Figures 3 to 8; and
Figure 11 shows an optic fibre amplifier unit with the optical system of Figure 1.

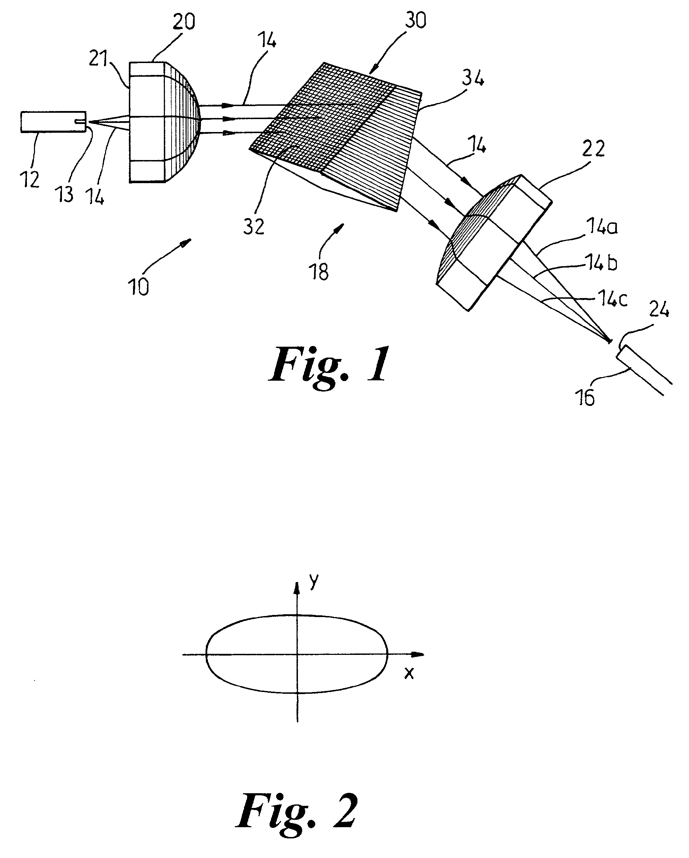

In Figure 1, there is shown an optical system 10 having a semiconductor laser 12 which produces an infra red light beam 14, represented here by three rays 14a,14b,14c. The light beam 14 is coupled from the laser 12 into an optic fibre end 16 by a coupling assembly 18. The coupling assembly 18 includes a collimating lens 20 for collimating the light beam 14 produced by the laser 12, and a focusing lens 22 for focusing the collimated light beam 14 into an input face 24 of the optic fibre end. Between the collimating lens 14 and the focusing lens 22 the light beam 14 passes through a prism 30, the prism 30 having an input facet 32 through which the beam 14 enters the prism 30 and an output facet 34 through which the light beam 14 leaves the prism 30.

The input facet 32 and output facet 34 of the prism are at an angle to one another in two directions, so that the effect of the prism 30 is to expand the beam 14 in a first direction, and to compress the beam in a second direction, the second direction being orthogonal to the first direction. The beam 14 impinges on the input facet 32 at a non-normal angle of incidence, thereby becoming contracted in one direction, and is internally incident upon output facet 34 also at a non-normal angle thereto, thereby becoming expanded in another direction.

The beam 14 remains collimated when it leaves the prism 30, but an angle to the direction of the beam when it enters the prism 30.

A cross section of the beam 14 is shown schematically in Figure 2, before the beam 14 has passed through the prism. The beam 14 is approximately elliptical due to the geometry of the laser 12, the elliptical cross section having a long axis in the x direction and a short axis in the y direction according to the axes chosen in Figure 2. The prism 30 is orientated such that it compresses the beam 14 in the x direction and expands the beam 14 in the y direction, such that the resulting beam leaving the prism 30 is approximately circular in cross section. Since the optic fibre 16 is circular in cross section, the more closely circular cross section of the light beam 14 brought about by the prism 30 increases the proportion of light that can be focussed into the optic fibre 16 by the focusing lens 22.

The input face 32 of the prism 30 is inclined at an angle to the beam 14, the angle in this example being about 61 degrees, and the beam 14 leaves the prism 30 at an angle of about 50 degrees to the output face of the prism 30, the angle between the beam 14 when it enters and leaves the prism 30 being about 33 degrees in one direction, and 25 degrees in an orthogonal direction.

The collimating lens 20 is a circular lens about 2 mm in diameter having a substantially flat face 21 facing the laser 12, and a curved face 23 facing the prism 30. The collimating lens is arranged such that its focal point lies close to the output facet 13 of the laser 12.

The focusing lens 22 is also a circular lens about 2 mm in diameter, the focusing lens 22 having a curved face facing the output face of the prism 30 and a flat face facing the input facet 24 of the optic fibre. The focal point of the lens 22 lies close to the input facet 24 of the optic fibre 16.

The prism 30, focusing lens 22 and the collimating lens 20 are made of LaSFN9 glass manufactured by Schott.

The laser 12 is a GaAs-AlGaAs heterojunction laser, having a light power output of 100 mW to 400 mW. Typically, such a laser will have an elliptical light output beam as shown in Figure 2, the ratio between the length of the long axis and the length of the short axis being approximately 3:1.

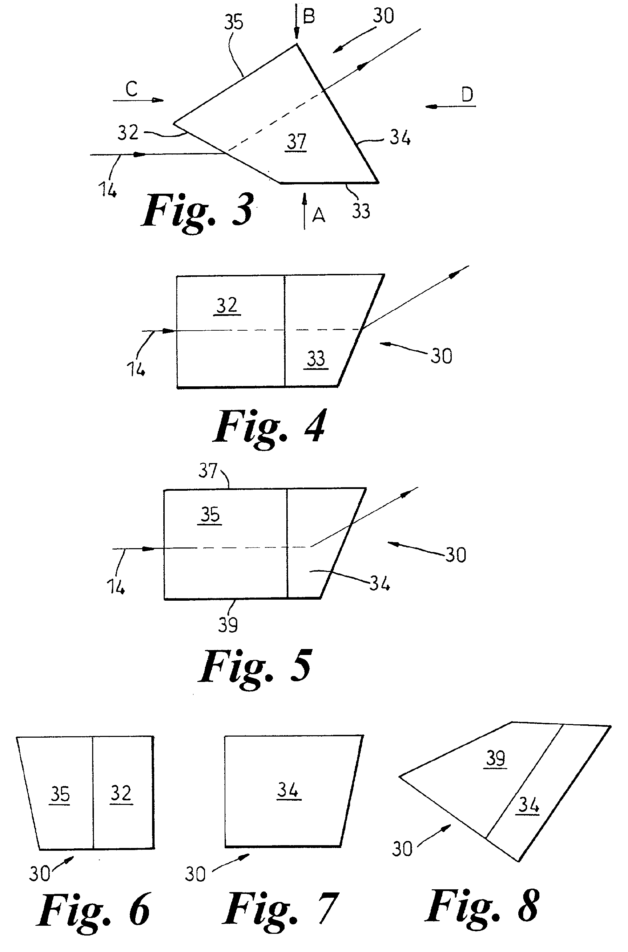

The prism 30 can be seen in more detail in Figures 3 to 10, which show different views of the prism 30, approximately to scale. The prism has four sides faces 33,35,37,39 in addition to the input face 32 and the output face 34. One of the faces 33 can be used as a mounting surface form mounting the prism 30 on a substrate (not shown).

The light beam 14 is shown in Figures 3 to 5 as a continuous line outside the prism 30 and a dashed line within the prism 30. The angles between the different faces of the prism 30 are indicated in degrees, as are the angles which the beam 14 makes with the input face 32 and the output face 34 respectively.

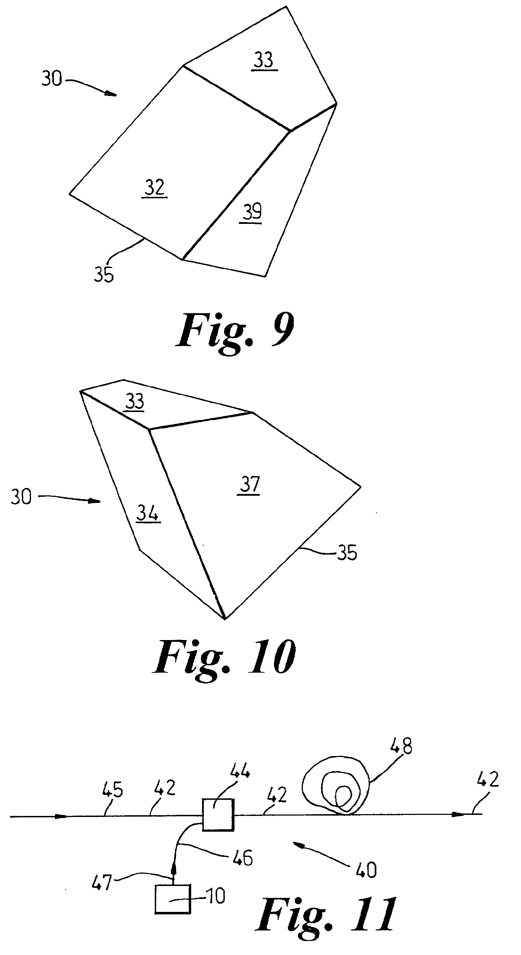

In Figure 11, there is shown an optical amplifier 40 for amplifying an optical information signal 45 transmitted by an optic fibre 42. The information signal 45 contains components of different wavelength, the different wavelengths being centred around 1550 nm and spaced by about 0.2nm, making the information signal suitable for wavelength division multiplexing. The amplifier unit 40 includes a wavelength divisional multiplexer 44 for superposing an optical pumping 47 signal at a wavelength of 980 nm to the information signal, the pumping signal 47 being carried to the wavelength divisional multiplexer 44 by an auxiliary optic fibre 46. The information signal 45 and the superposed pumping signal 47 pass through an amplifying medium comprising a section of Er doped optic fibre 48, such that the pumping signal 42 causes population inversion in the Er doped fibre 48 and the information signal cause stimulated emission in the Er doped fibre. The pumping signal is provided by the optical system 10 shown in Figure 1, the optic fibre 16 in Figure 1 corresponding to the auxiliary fibre 46 of Figure 11.

As it will be appreciated, this invention provides a simple way of circularising an elliptical beam of light in order to couple the light into an optic fibre having a circular cross section.

## Claims

1. An optical system (10) comprising: a laser (12) having a laser output (13); an optic fibre (16) having an optic fibre end (24); and, a coupling assembly (18) for coupling a light beam (14) from the laser output (13) into the optic fibre end (24), the coupling assembly (18) having:
a laser output lens (20) for collimating the light incident from the laser (12) on the lens;
a fibre input lens (22) for focusing the light beam (14) into the optic fibre end (24);
a prism (30) having a light input facet (32) and a light output facet (34);
the prism (30) being arranged between the laser output lens (20) and the fibre input lens (22) such that the collimated light beam (14) is incident on the input facet (32) of the prism (30) and is emitted at the output facet (34) of the prism (30), wherein the light input facet (32) and the light output facet (34) of the prism (30) are each substantially planar and at an angle to one another, and
wherein the prism (30) is oriented such that in cross section the light beam (14) leaving the prism (30) at the output facet (34) is expanded in one direction and contracted in another direction by the prism (30).

2. An optical system (10) as claimed in Claim 1 wherein the laser output (13) is arranged relative to the prism (30) such that the light incident on the input facet (32) of the prism (30) is p-polarised and is incident at an angle that is substantially equal to Brewster's angle.

3. An optical system (10) as claimed in Claim 1 or Claim 2 wherein the beam (14) impinges the upon the internal side of the output facet (34) of the prism (30) at an angle to the normal direction of the output facet (34).

4. An optical system (10) as claimed in Claim 3 wherein the angle to the normal direction is at least 10 degrees.

5. An optical system (10) as claimed in any preceding claim, wherein the prism (30) has four side faces, each of which is substantially flat.

6. An optical system (10) as claimed in any preceding claim, wherein the prism (30) is arranged relative to the light beam (14) such that the beam (14) suffers internal reflection at at least one side face, and wherein the side face(s) has a mirror coating thereon to increase the amount of light internally reflected.

7. An optical system (10) as claimed in any preceding claim wherein the prism (30) is formed from LaSFN9 glass.

8. An optical system (10) as claimed in any one of Claims 1 to 6, wherein the prism (30) is formed from ZnS.

9. An optical system (10) as claimed in any preceding claim wherein the laser (12) is formed from layers of GaAs and GaAlAs, and produces light at a wavelength of substantially 980 nm at an output power of between about 100 mW and about 400 mW.

10. An optical system (10) as claimed in any preceding claim wherein the fibre end has a flat terminating face that is at about 8 to 12 degrees to the axis of the fibre.

11. An optical coupling assembly (18) for coupling a light beam (14) from a laser output (13) into an optic fibre end (24), the coupling assembly (18) comprising:
a laser output lens (20) for collimating the light beam (14) incident from the laser (12);
a fibre input lens (22) for focusing the light beam (14) into the end of the optic fibre (16);
a prism (30) having a light input facet (32) and a light output facet (34),
the prism (30) being arranged between the laser output lens (20) and the fibre input lens (22) such that the collimated light beam (14) is incident on the input facet (32) of the prism (30) and is emitted at the output facet (34) of the prism (30),
wherein the light input facet (32) and the light output facet (34) of the prism (30) are each substantially planar and at an angle to one another, and wherein the prism (30) is oriented such that in cross section the light beam (14) leaving the prism (30) at the output facet (34) is expanded in one direction and contracted in another direction by the prism (30).
